# EUROPÄISCHE PATENTSCHRIFT

(11) **EP 1 604 920 B1**
(45) Veröffentlichungstag und Bekanntmachung des Hinweises auf die Patenterteilung: **05.09.2007**
(21) Anmeldenummer: 04017598.6
(22) Anmeldetag: 24.07.2004
(51) Int. Cl.: B65G 25/02, B23Q 7/14, B23Q 7/00

(54) **Transport-Einrichtung zum Transport von Werkstücken, insbesondere in Transferstrassen**
Means for transporting of workpieces, in particular in transfer lines
Dispositif de transport pour pièces outils, en particulier dans les chaînes de transfert

(30) Priorität: 12.06.2004 DE 102004028596
(43) Veröffentlichungstag der Anmeldung: 14.12.2005
(73) Patentinhaber: Cross Hüller GmbH, 71636 Ludwigsburg (DE)
(72) Erfinder: Casper, Jürgen, 71696 Möglingen (DE); Strohhäcker, Klaus, 71638 Ludwigsburg (DE); Schlegel, Thomas, 74366 Kirchheim (DE)
(74) Vertreter: Rau, Manfred

(56) Entgegenhaltungen:
- WO-A-03/086699
- DE-A1- 2 809 955
- GB-A- 2 057 996
- US-A- 4 270 655
- US-A- 4 730 722

## Beschreibung

Die Erfindung betrifft eine *Transferstraße* zum Transport von Werkstücken von einer ersten Bearbeitungs-Station zu einer benachbarten zweiten Bearbeitungs-Station.

Transferstraßen weisen in der Regel eine Mehrzahl von einzelnen Bearbeitungs-Stationen auf, die zur Bearbeitung von gleichen oder unterschiedlichen Werkstücken dienen. Die jeweilige Bearbeitungs-Station ist auf eine vorgegebene Bearbeitung eines Werkstücks ausgelegt.

Aus der WO 03/086699 A1 ist eine Transport-Einrichtung der allgemeinen Gattung bekannt, die ein Gestell aufweist, das vor und mittig zwischen zwei benachbarten Bearbeitungs-Stationen anzuordnen ist. Auf dem Gestell ist ein Transport-Balken in seiner Längsrichtung verschiebbar gelagert, auf dem wiederum ein über die Länge des Transport-Balkens verschiebbarer Werkstück-Aufnahme-Schlitten angeordnet ist. Zum Transport eines Werkstücks von einer Bearbeitungs-Station zu einer benachbarten Bearbeitungs-Station wird der Transport-Balken mit dem der ersten Bearbeitungs-Station benachbarten Ende vor diese verfahren und auch der Werkstück-Auflage-Schlitten hierher verfahren. Dann wird das Werkstück aufgelegt und anschließend der Transport-Balken mit seinem anderen Ende vor die zweite Bearbeitungs-Station verfahren. Der Werkstück-Auflage-Schlitten wird zusammen mit dem Werkstück gleichermaßen in diese Position verfahren, so dass das Werkstück sich vor der zweiten Bearbeitungs-Station befindet. Diese Ausgestaltung weist den Nachteil auf, dass sie konstruktiv verhältnismäßig aufwändig ist und dass eine Überprüfung der auf der ersten Bearbeitungs-Station durchgeführten Bearbeitungsgänge nicht möglich ist.

Der Erfindung liegt die Aufgabe zugrunde, eine *Transferstraße* der allgemeinen Gattung zu schaffen, die konstruktiv einfach und damit robust ausgebildet ist und die Überprüfungen der Werkstücke zwischen den Bearbeitungs-Vorgängen zulässt.

Diese Aufgabe wird erfindungsgemäß durch die Merkmale des Anspruches 1 gelöst. Durch die erfindungsgemäßen Maßnahmen wird eine einfache, kompakte und damit kostengünstige *Transferstraße* geschaffen. Der Transport-Balken nimmt das Werkstück vor einer Bearbeitungs-Station auf, transportiert es zu einem Ablage-Platz, senkt es dort ab, verfährt wieder in seine ursprüngliche Stellung, wird angehoben und transportiert anschließend das Werkstück zu der nächsten Bearbeitungs-Station. Die Transport-bewegung ist also in zwei Transport-Schritte aufgeteilt, da das Werkstück gleichsam auf halber Strecke auf dem Ablage-Platz abgelegt wird. Hier kann es inspiziert werden, und zwar entweder visuell oder durch automatische Prüfeinrichtungen.

Vorteilhafte Ausgestaltungen ergeben sich aus den Unteransprüchen. Die Ansprüche 2 bis 7 geben Weiterbildungen an, die sich auf den robusten Aufbau beziehen. *Der Anspruch 8 gibt* an, wie in sehr einfacher Weise die Transport-Bewegung gesteuert werden kann.

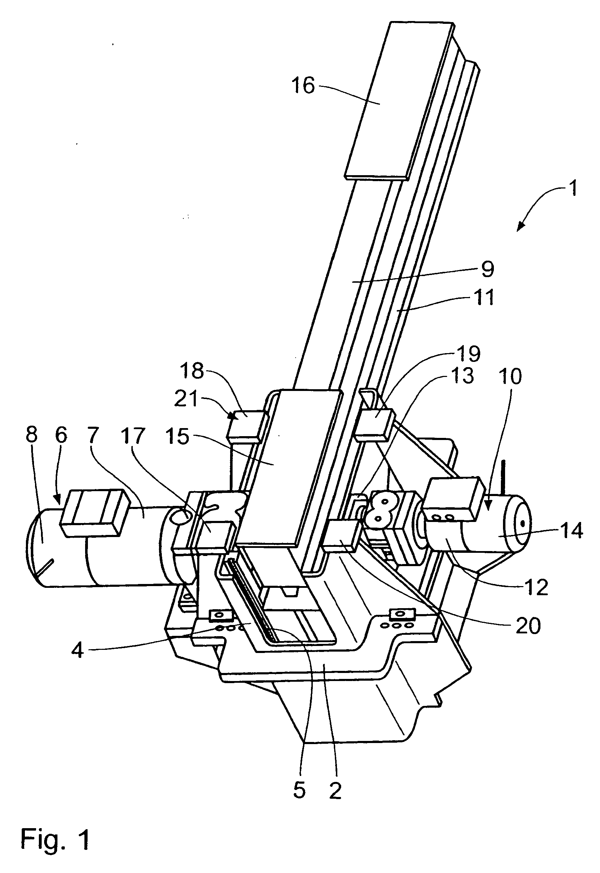

Weitere Merkmale, Vorteile und Einzelheiten der Erfindung ergeben sich aus der nachfolgenden Beschreibung eines Ausführungsbeispiels anhand der Zeichnung. Es zeigt
- Fig. 1: eine perspektivische Darstellung einer Transport-Einrichtung *für eine Transferstraße nach der Erfindung* und
- Fig. 2 bis 5: den Ablauf einer Transport-Bewegung beim Transport eines Werkstücks von einer ersten Bearbeitungs-Station zu einer benachbarten zweiten Bearbeitungs-Station in stark schematisierter Darstellung.

Die in der Zeichnung dargestellte Transport-Einrichtung 1 weist ein Gestell 2 auf. Auf dem Gestell 2 ist in einer Vertikal-Führung 4 ein vertikal verfahrbarer Hub-Schlitten 5 geführt. Der Hub-Schlitten 5 ist mittels eines Hub-Antriebes 6 vertikal in der Vertikal-Führung 4 verfahrbar. Der Hub-Antrieb 6 besteht aus einem Servomotor 7 mit einem üblichen Positions-Geber 8, der die absolute Höhenstellung des Hub-Schlittens 5 als Signal auf eine nicht dargestellte Steuerung gibt.

Im Hub-Schlitten 5 ist wiederum ein Transport-Balken 9 in horizontaler Richtung verschiebbar gelagert. Der Transport-Balken 9 ist mittels eines Transport-Antriebs 10 horizontal verschiebbar. Der Antrieb 10 weist eine am Transport-Balken 9 in dessen Längsrichtung angebrachte Zahnstange 11 auf, in die ein von einem Servomotor 12 antreibbares Zahnritzel 13 eingreift. Der Servomotor 12 ist ebenfalls mit einem Positions-Geber 14 versehen, der die Absolutstellung des Transport-Balkens 9 erfasst und als Signal auf die nicht dargestellte Steuerung gibt. An den beiden Enden des Transport-Balkens 9 sind auf dessen Oberseite zwei Werkstück-Auflagen 15 beziehungsweise 16 befestigt. Am Gestell 2 sind beiderseits des Transport-Balkens 9 und in dessen Längsrichtung voneinander beabstandet insgesamt vier in einer gemeinsamen horizontalen Ebene liegende Ablage-Flächen 17, 18, 19, 20 angebracht, die gemeinsam einen Ablage-Platz 21 bilden.

Die vertikale Verfahrbarkeit des Hub-Schlittens 5 ist derart ausgelegt, dass die jeweilige Werkstück-Auflage 15 beziehungsweise 16 sich oberhalb des durch die Ablage-Flächen 17 bis 20 gebildeten Ablage-Platzes 21 oder unterhalb dieses Ablage-Platzes befinden kann.

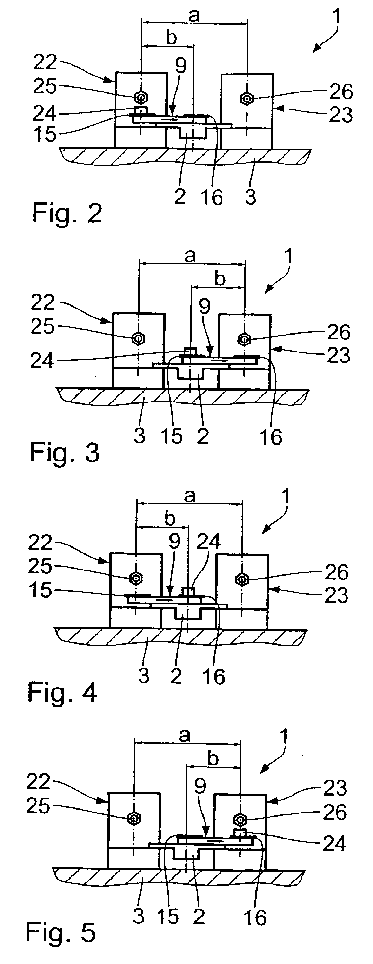

Der Einsatz beziehungsweise die Anwendung der Transport-Einrichtung 1 ergibt sich aus der schematischen Darstellung in den Fig. 2 bis 5.

Wie dort dargestellt ist, befindet sich die Transport-Einrichtung 1 vor und mittig zwischen zwei Bearbeitungs-Stationen 22 beziehungsweise 23, d. h. das Gestell 2 befindet sich in der Mitte zwischen diesen beiden Stationen 22, 23. Das Gestell 2 ist auf den benachbarten Bearbeitungs-Stationen 22 und 23 abgestützt. Wenn ein Werkstück 24 von der einen Bearbeitungs-Station 22 zu der in Bearbeitungsrichtung nächsten Bearbeitungs-Station 23 weiter transportiert werden soll, dann ist der Transport-Balken 9 mit seiner Werkstück-Auflage 15 vor die Bearbeitungs-Station 22 verfahren. Hier wird in nicht dargestellter Weise das Werkstück 24 von der Bearbeitungs-Station 22 auf der Werkstück-Auflage 15 abgelegt. Der Transport-Balken 9 befindet sich in seiner geschilderten oberen Hub-Position. Er wird nunmehr aus der Transport-Position gemäß Fig. 2 in die Transport-Position gemäß Fig. 3 verfahren, wobei die Werkstück-Auflage 15 mit dem darauf abgelegten Werkstück 24 in die Position über dem Ablage-Platz 21 gelangt. Nunmehr wird der Hub-Schlitten 5 mit dem Transport-Balken 9 in seine untere Hub-Position abgesenkt, was in der Zeichnung nicht dargestellt ist, wodurch das Werkstück 24 auf dem Ablage-Platz 21 abgelegt wird. Die darunter befindliche Werkstück-Auflagefläche 15 kommt vom Werkstück 24 nach unten frei. Bei dieser Zwischenlagerung des Werkstückes 24 auf dem Ablage-Platz 21, kann das Werkstück inspiziert werden, und zwar entweder visuell oder durch selbsttätige Kontrolleinrichtungen.

Der Transport-Balken 9 kann nunmehr wieder in die in Fig. 4 dargestellte Position verfahren werden, die der nach Fig. 2 mit dem Unterschied entspricht, dass sich der Transport-Balken 9 in seiner unteren Position befindet. Nunmehr wird der Transport-Balken 9 durch entsprechendes Verfahren des Hub-Schlittens 5 nach oben verfahren, wodurch das Werkstück 24 von der Werkstück-Auflage 16 von unten aufgenommen und von dem Ablage-Platz 21 abgehoben wird. Anschließend wird der Transport-Balken 9 wieder in die Fig. 3 entsprechende Position verfahren, wodurch die Werkstück-Auflage 16 mit dem Werkstück 24 vor die Bearbeitungs-Station 23 gelangt. Hier kann das Werkstück 24 dann wiederum in geeigneter Weise auf diese Bearbeitungs-Station 23 übergeben werden.

Wie die Fig. 2 bis 5 erkennen lassen, weisen die Arbeits-Stellen 25 beziehungsweise 26 der Bearbeitungs-Stationen 22, 23 einen Abstand a auf. Die beiden Werkstück-Auflagen 15, 16 des Transport-Balkens 9 haben einen Mittenabstand b. Es gilt: a ≤ 2b. Dies bedeutet, dass der maximale Abstand a der beiden Arbeits-Stellen 25, 26 der Bearbeitungs-Stationen 22, 23 nicht größer sein darf als der doppelte Mittenabstand b der Werkstück-Auflagen 15, 16 auf dem Transport-Balken 9, damit in der geschilderten Weise ein Werkstück 24 in zwei Transportschritten von einer Bearbeitungs-Station 22 zur nächsten Bearbeitungs-Station 23 gefördert werden kann. Der Abstand a kann aber kleiner als der doppelte Mittenabstand b sein. In diesem Fall wird der Transport-Balken 9 nicht jeweils über seinen maximal möglichen Verschiebeweg b verschoben. Die benachbarten Bearbeitungs-Stationen 22, 23 können also einen beliebigen Abstand a zueinander haben, dessen Maximalwert lediglich durch den doppelten Mittenabstand b der Werkstück-Auflagen 15, 16 vorgegeben ist.

## Patentansprüche

1. *Transferstraße mit einer* Transport-Einrichtung (1) zum Transport von Werkstücken (24) von einer ersten Bearbeitungs-Station (22) zu einer benachbarten zweiten Bearbeitungs-Station (23),
- *mit je einer Arbeits-Stelle (25, 26) an jeder Bearbeitungs-Station (22, 23), die einen Abstand a voneinander aufweisen,*
- mit einem vor und mittig zwischen den Bearbeitungs-Stationen (22, 23) angeordneten Gestell (2),
-- das einen Ablage-Platz (21) für mindestens ein Werkstück (24) aufweist,
*und*
- mit einem Transport-Balken (9),
-- der zwei Endbereiche mit einer ersten *Werkstück-Auflage (15) und im Mittenabstand b hiervon* einer zweiten Werkstück-Auflage (16) aufweist, *wobei gilt: a ≤ 2b*
-- der im Gestell (2) derart zwischen einer ersten Hub-Position und einer zweiten Hub-Position höhenverstellbar gelagert ist, dass die Werkstück-Auflagen (15, 16) sich oberhalb oder unterhalb des Ablage-Platzes (21) befinden, und
-- der in seiner Längsrichtung derart zwischen einer ersten Transport-Position und einer zweiten Transport-Position verschiebbar ausgebildet ist, dass die erste oder die zweite Werkstück-Auflage (15, 16) sich in horizontaler Überdeckung mit dem Auflage-Platz (21) befindet.

2. *Transferstraße* nach Anspruch 1, **dadurch gekennzeichnet, dass** der Transport-Balken (9) horizontal verschiebbar in einem Hub-Schlitten (5) gelagert ist.

3. *Transferstraße* nach Anspruch 1, **dadurch gekennzeichnet, dass** der Transport-Balken (9) mittels eines Transport-Antriebs (10) horizontal verschiebbar ist.

4. *Transferstraße* nach Anspruch 2 und 3, **dadurch gekennzeichnet, dass** der Transport-Antrieb (10) einen am Hub-Schlitten (5) angeordneten Servomotor (12) und eine am Transport-Balken (9) angebrachte Zahnstange (11) aufweist, in die ein Zahnritzel (13) des Servomotors (12) eingreift.

5. *Transferstraße* nach Anspruch 2, **dadurch gekennzeichnet, dass** der Hub-Schlitten (5) mittels eines am Gestell (2) angeordneten Hub-Antriebs (6) vertikal verschiebbar ist.

6. *Transferstraße* nach Anspruch 5, **dadurch gekennzeichnet, dass** der Hub-Antrieb (6) einen Servomotor (7) aufweist.

7. *Transferstraße* nach Anspruch 1, **dadurch gekennzeichnet, dass** der Ablage-Platz (21) durch mindestens zwei beiderseits des Transport-Balkens (9) angeordnete, eine gemeinsame horizontale Fläche bildende Ablage-Flächen (17 bis 20) gebildet ist.

8. *Transferstraße* nach Anspruch 3 oder 5, **dadurch gekennzeichnet, dass** die Antriebe (6, 10) mit Positions-Gebern (8, 14) versehen sind.

## Claims

1. A transfer line with a transporting arrangement (1) for transporting workpieces (24) from a first workstation (22) to an adjacent second workstation (23), in particular in transfer lines, comprising
- one working place (25, 26) at each workstation (22, 23), having a distance a from each other,
- a frame (2) to be disposed in front of, and centrally between, the workstations (22, 23),
-- the frame (2) comprising a depositing place (21) for at least one workpiece (24);
and
- a transporting beam (9),
-- which comprises two end areas with a first work support (15) and, at a center distance b thereof, a second work support (16), with a ≤ 2b applying,
-- which is mounted on the frame (2) for height adjustment between a first position of lifting and a second position of lifting such that the work supports (15, 16) are located above or below the depositing place (21), and
-- which is longitudinally displaceable between a first position of transfer and a second position of transfer for the first or the second work support (15, 16) to coincide horizontally with the depositing place (21).

2. A transfer line according to claim 1, **characterized**
**in that** the transporting beam (9) is supported for horizontal displacement in a lifting skid (5).

3. A transfer line according to claim 1, **characterized**
**in that** the transporting beam (9) is horizontally displaceable by a transporting drive (10).

4. A transfer line according to claim 2 and 3, **characterized**
**in that** the transporting drive (10) comprises a servomotor (12) which is disposed on the lifting skid (5) and a rack (11) which is mounted on the transporting beam (9) and which a pinion (13) of the servomotor (12) engages with.

5. A transfer line according to claim 2, **characterized**
**in that** the lifting skid (5) is vertically displaceable by a lifting drive (6) which is mounted on the frame (2).

6. A transfer line according to claim 5, **characterized**
**in that** the lifting drive (6) comprises a servomotor (7).

7. A transfer line according to claim 1, **characterized**
**in that** the depositing place (21) is comprised of at least two depositing surfaces (17 to 20) which are disposed on both sides of the transporting beam (9), forming a joint horizontal surface.

8. A transfer line according to claim 3 or 5, **characterized**
**in that** the drives (6, 10) are provided with position transmitters (8, 14).

## Revendications

1. *Ligne de transfert* avec un dispositif de transport (1) pour le transport de pièces (24) d'un premier poste d'usinage (22) vers un deuxième poste d'usinage (23),
- *avec un poste de travail (25, 26) au niveau* de *chaque poste d'usinage (22, 23), qui présentent une distance a entre eux,*
- avec un châssis (2) disposé avant et au milieu entre les postes d'usinage (22, 23),
-- qui comprend un emplacement de stockage (21) pour au moins une pièce (24), et
- avec une barre de transport (9)
- - qui comprend deux extrémités avec un premier support de pièce (15) et, à un entraxe b correspondant, un deuxième support de pièce (16), moyennant quoi : a ≤ 2b
- - qui est logé dans le châssis (2) de manière réglable en hauteur entre une première position de levage et une deuxième position de levage, de telle sorte que les supports de pièces (15, 16) se trouvent au-dessus ou en dessous de l'emplacement de stockage (21), et
- - qui est conçu de manière coulissante dans le sens longitudinale entre une première position de transport et une deuxième position de transport, de telle sorte que le premier ou le deuxième support de pièce (15, 16) se trouve en superposition horizontale avec l'emplacement de stockage (21).

2. *Ligne de transfert* selon la revendication 1, **caractérisée en ce que** la barre de transport (9) est logée de manière coulissante horizontalement dans un chariot de levage (5).

3. *Ligne* de *transfert* selon la revendication 1, **caractérisée en ce que** la barre de transport (9) coulisse horizontalement à l'aide d'un entraînement de transport (10).

4. *Ligne* de *transfert* selon les revendication 2 et 3, **caractérisée en ce que** l'entraînement de transport (10) comprend un servomoteur (12) sur le chariot de levage (5) et une crémaillère (11), disposée sur la barre de transport (9), avec laquelle s'engrène un pignon (13) du servomoteur (12).

5. *Ligne de transfert* selon la revendication 2, **caractérisée en ce que** le chariot de levage (5) coulisse verticalement à l'aide d'un entraînement de levage (6) disposé sur le châssis (2).

6. *Ligne de transfert* selon la revendication 5, **caractérisée en ce que** l'entraînement de levage (6) comprend un servomoteur (7).

7. *Ligne de transfert* selon la revendication 2, **caractérisée en ce que** l'emplacement de stockage (21) est constitué d'au moins deux surfaces d'appui (17 à 20), formant une surface horizontale commune, disposées des deux côtés de la barre de transport (9).

8. *Ligne de transfert* selon la revendication 3 ou 5, **caractérisée en ce que** les entraînements (6, 10) sont munis de capteurs de position (8, 14).
